# FASCICULE DE BREVET EUROPEEN

(11) **EP 1 437 535 B1**
(45) Date de publication et mention de la délivrance du brevet: **23.05.2007**
(21) Numéro de dépôt: 04290007.6
(22) Date de dépôt: 06.01.2004
(51) Int. Cl.: F16H 63/30, F16H 59/04

(54) **Dispositif de commande de boîte de vitesse à cinematique guidée**
Getriebeschaltvorrichtung mit geführter Kinematik
Gear box control device with guided kinematics

(30) Priorité: 07.01.2003 FR 0300097
(43) Date de publication de la demande: 14.07.2004
(73) Titulaire: SC2N, 78180 Montigny-le-Bretonneux (FR)
(72) Inventeur: Hallet, Michel, 14320 Clinchamps-sur-Orne (FR); Lerenard, Daniel, 14120 Mondeville (FR)
(74) Mandataire: Texier, Christian

(56) Documents cités:
- DE-A- 10 154 429
- US-A1- 2001 022 111
- PATENT ABSTRACTS OF JAPAN vol. 017, no. 490 (M-1474), 6 septembre 1993 (1993-09-06) -& JP 05 118414 A (TOYOTA MOTOR CORP), 14 mai 1993 (1993-05-14)

## Description

L'invention concerne un dispositif de commande de boîte de vitesse destiné à être installé dans un haut de colonne de direction d'un véhicule automobile.

Actuellement, les dispositifs de commande de boîte de vitesse situés en haut de colonne sont principalement destinés à commander une boîte de vitesse séquentielle en permettant de monter ou de descendre les différents rapports de ladite boîte de vitesse. Dans le cas de commande de boîte de vitesse dite automatique, en plus de permettre un fonctionnement séquentiel comme décrit ci-dessus, il est possible de sélectionner un des trois autres modes de fonctionnement d'une telle boîte de vitesse telle que la marche arrière (R), le point mort (M) et le mode automatique (D). Toutefois, l'agencement d'un tel dispositif de commande ne permet pas de sécuriser de manière fiable le positionnement du levier de commande au niveau de l'un des quatre modes de fonctionnement de la boîte de vitesse. En effet, si, pour une raison quelconque, le conducteur accroche et déplace le levier de commande conduisant à un changement du mode de fonctionnement de la boîte de vitesse automatique, le levier de commande peut se positionner sur le mode de marche arrière (R), ce qui est très préjudiciable lorsque le véhicule roule soit en mode séquentiel soit en mode automatique.

JP 05118414 A décrit un dispositif de commande de boîte de vitesse comme définit par le préambule de la revendication 1.

Un but de l'invention est de fournir un dispositif de commande de boîte de vitesse automatique situé sur un haut de colonne de direction sécurisé.

A cet effet, on prévoit, selon l'invention, un dispositif de commande de boîte de vitesse destiné à être installé dans un haut de colonne de direction, sous un volant de direction, notamment d'un véhicule automobile, comportant un levier de commande d'un mécanisme de pilotage de la boîte de vitesse selon au moins deux axes sensiblement orthogonaux entre eux, un mouvement du levier de commande étant guidé par une grille comportant un chemin de guidage permettant de différencier les différentes positions du levier de commande, caractérisé en ce que le dispositif de commande comprend un galet lié au levier de commande apte à être guidé par le chemin de guidage de la grille.

Avantageusement, mais facultativement, le dispositif présente au moins l'une des caractéristiques suivantes
- la grille représente une forme cylindrique d'axe Y,
- la grille présente une forme sphérique de centre un point d'intersection de l'axe X et Y,
- la grille comprend une butée de passage entre une position neutre et une position de marche arrière,
- la grille est agencée de sorte que le retour entre une position de marche arrière et une position neutre se fasse selon un mouvement simple du levier de commande.

D'autres caractéristiques et avantages de l'invention apparaîtront lors de la description ci-après d'un mode de réalisation préféré. Aux dessins annexés :
- La figure 1 est une vue en trois dimensions d'un dispositif selon l'invention.
- La figure 2 est une vue agrandie en trois dimensions d'un système de sécurisation du dispositif selon l'invention.
- Les figures 3 et 4 sont une illustration du fonctionnement du système de sécurité du dispositif selon l'invention.

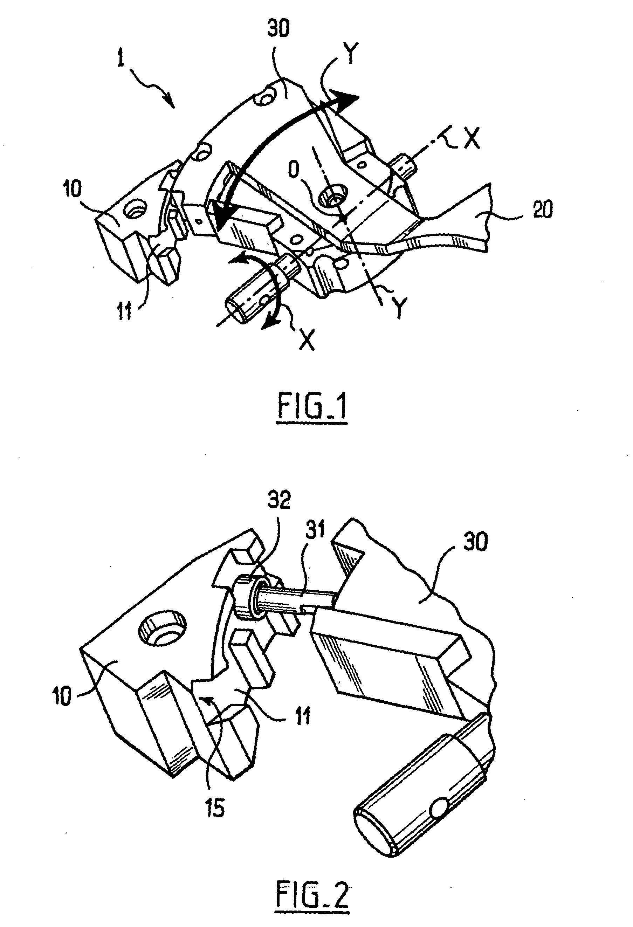

En référence à la figure 1, un dispositif de commande de boîte de vitesse 1 comprend un corps de mécanisme principal 30 monté en rotation selon un axe Y par rapport à un haut de colonne non représenté et monté en outre selon un axe X par rapport à l'axe Y. Il est à noter que les deux axes X et Y sont sensiblement orthogonaux l'un par rapport à l'autre. Dans une variante de réalisation, les deux axes X et Y se coupent en un point ○.

Le dispositif de commande de boîte de vitesse 1 comprend en outre un levier de commande 20 du mécanisme 30 et lié à ce dernier par une liaison encastrement.

D'autre part, le dispositif de commande de boîte de vitesse 1 comprend un élément de sécurisation 10 fixe par rapport au haut de colonne du véhicule sur lequel il est installé.

En référence à la figure 2, l'élément de sécurisation 10 présente, sur une face en regard du mécanisme principal 30, une grille 11 apte à interagir avec un élément de guidage 31 du mécanisme principal 30. L'extrémité de l'élément de guidage 31 apte à coopérer avec la grille 11 comporte un galet 32 monté libre à rotation sur une extrémité de l'élément de guidage 31, extrémité opposée au mécanisme principal. Ce galet permet de faciliter le déplacement de l'élément de guidage 31 sur la grille 11.

Selon un mode préféré de réalisation, la grille 11 comprend un chemin de guidage 15 apte à guider le galet 32 et/ou l'extrémité de l'élément de guidage 31.

Avantageusement, dans une variante de réalisation, la grille 11 présente une forme cylindrique d'axe sensiblement équivalent à l'axe Y. Dans une autre variante de réalisation, la grille 11 peut présenter une forme sphérique dont le centre est le point ○ d'intersection de l'axe Y et de l'axe X.

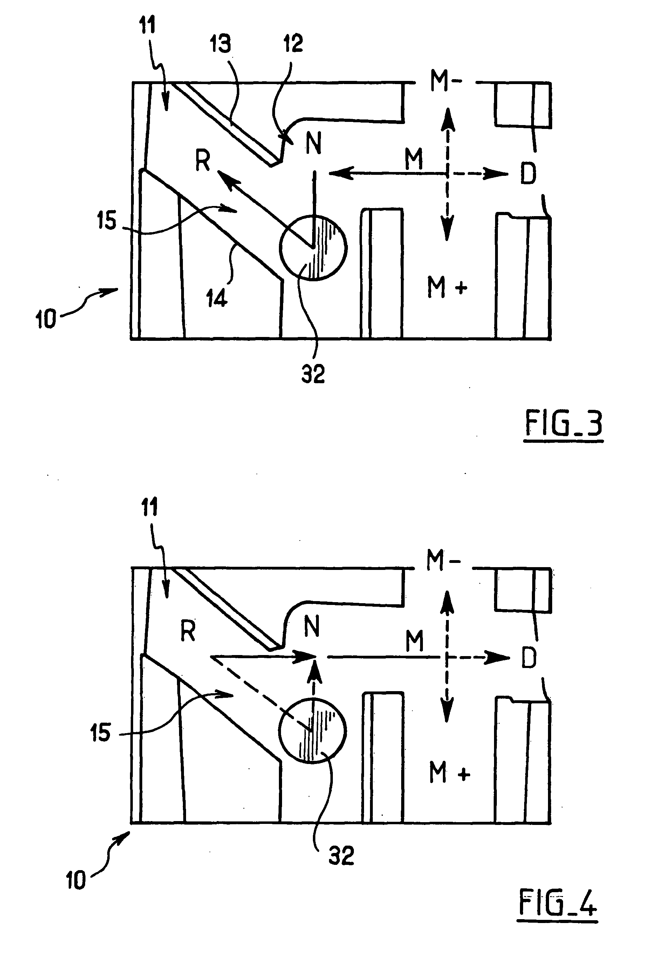

En référence aux figures 3 et 4, nous allons maintenant décrire le mode de fonctionnement du dispositif de commande de boîte de vitesse selon l'invention. Le chemin de guidage 15 de la grille 11 présente quatre zones principales nommées R, N, M et D. Les zones N, M et D forment une croix dont le centre est la position M, l'extrémité droite la position D, l'extrémité gauche la position N. L'extrémité haute et l'extrémité basse sont respectivement la position M- et la position M+. La position N correspond à la position neutre de la boite de vitesse, c'est-à-dire que dans cette position aucune vitesse n'est engagée (la boîte est alors considérée comme au repos). La position M est la position de fonctionnement manuelle : dans cette position, le conducteur est apte à gérer le rapport engagé lors du fonctionnement de la boîte de vitesse à l'aide du levier de commande 20. Il positionne ledit levier de commande en position M- pour descendre les rapports et en position M+ pour monter les rapports. Pour le passage entre les positions M- M et M+, le levier de commande effectue une rotation selon l'axe X. Enfin, la position D est la position correspondant au mode de fonctionnement automatique de la boîte de vitesse, c'est-à-dire que c'est le véhicule et en particulier la boîte de vitesse qui gère les rapports Dans la position D, le conducteur ne peut déplacer en rotation selon l'axe X le levier de commande même de manière accidentelle, que ce soit vers la position M- que vers la position M+. Ainsi, le mode automatique est sécurisé par un changement intempestif de vitesse du fait du conducteur. Il est à noter que la grille 11 permet un passage des positions N, M et D relativement libre, passage s'effectuant par un mouvement de rotation selon l'axe Y du levier de commande 20. En effet, tout changement impromptu de la position D à la position M (le dernier rapport enclenché automatiquement est conservé) ou de la position M à la position N (le véhicule se retrouve en roue libre) et inversement est sans conséquence du point de vu de la sécurité pour l'utilisateur alors que véhicule est en fonctionnement.

De plus, le chemin de guidage 15 de la grille 11 présente une position R particulière correspondant en fait au mode de fonctionnement de la boîte de vitesse en marche arrière. La position R est matérialisée sur le chemin de guidage 15 de la grille 11 par une rampe 13 présentant un angle, avantageusement mais facultativement de l'ordre de 45°, par rapport à une horizontale et dirigée vers le bas lorsque l'on passe de la position R à la position N. Au niveau de la position N, la rampe 13 se termine par une butée verticale 12 en regard de la position N.

En fonctionnement, en référence à la figure 3, pour passer de la position N à la position R, le conducteur doit faire un double mouvement successif : il fait effectuer au levier de commande 20 du dispositif un mouvement de rotation selon l'axe X de manière à désengager le galet 32 de la butée 12 et de présenter celui-ci dans l'axe de la rampe 13. Ensuite, le conducteur fait effectuer au levier de commande 20 une rotation selon l'axe Y de manière à amener le galet 32 en contact avec une face inférieure 14 de la rampe 13, ce qui engage le galet 32 dans ladite rampe et permet d'amener le dispositif de commande de la boîte de vitesse en position R alors que le levier de commande continue d'effectuer une rotation autour de l'axe Y ainsi qu'une rotation autour de l'axe X. Ce double mouvement imposé ne peut être réalisé par le conducteur que de manière consciente et volontaire. Tout mouvement intempestif, ou involontaire, de la part du conducteur sur le levier de commande 20 ne peut forcer le dispositif de commande de la boîte de vitesse de passer de la position N à la position R du fait de la butée 12.

En référence à la figure 4, le passage à la position R à la position N se fait selon un mouvement simple de rotation du levier de commande 20 selon l'axe Y. En effet, lors de ce mouvement, le galet 32 glisse sous la face supérieure 13 de la rampe qui, du fait de son inclinaison, oblige naturellement le levier à effectuer une rotation autour de l'axe X (de manière insensible pour le conducteur) et le galet à passer la butée 12 et à revenir en position neutre N.

Bien entendu, on pourra porter à l'invention de nombreuses modifications sans pour autant sortir du cadre de celle-ci.

## Revendications

1. Dispositif de commande de boîte de vitesse (1) destiné à être installé dans un haut de colonne de direction, sous un volant de direction notamment d'un véhicule automobile, comportant un levier de commande (20) d'un mécanisme de pilotage de la boîte de vitesse (30) selon au moins deux axes (X, Y) sensiblement orthogonaux entre eux, un mouvement du levier de commande étant guidé par une grille (11) comportant un chemin de guidage (15) permettant de différencier les différentes positions du levier de commande (20), **caractérisé en ce que** le dispositif de commande (1) comprend un galet (32) lié au levier de commande apte à être guidé par le chemin de guidage (15) de la grille.

2. Dispositif selon la revendication 1, **caractérisé en ce que** la grille présente une forme cylindrique d'axe Y.

3. Dispositif selon la revendication 1, **caractérisé en ce que** la grille présente une forme sphérique de centre un point d'intersection des axes X et Y.

4. Dispositif selon l'une des revendications 1 à 3, **caractérisé en ce que** la grille comprend une butée de passage entre une position neutre (N) et une position de marche arrière (R).

5. Dispositif selon l'une des revendications 1 à 4, **caractérisé en ce que** la grille est agencée de sorte que le retour entre une position de marche arrière (R) et une position neutre (N) se fasse selon un mouvement simple du levier de commande.

## Claims

1. Gearbox control device (1) intended to be installed in an upper part of a steering column, below a steering wheel, in particular a motor vehicle steering wheel, comprising a control lever (20) for operating a mechanism (30) serving to control the gearbox about at least two axes (X, Y) which are substantially at right angles to one another, a movement of the control lever being guided by a gate (11) comprising a guide track (15) for differentiating the various positions of the control lever (20), **characterized in that** the control device (1) comprises a roller (32) connected to the control lever that is able to be guided by the guide track (15) of the gate.

2. Device according to Claim 1, **characterized in that** the gate has a cylindrical shape of axis Y.

3. Device according to Claim 1, **characterized in that** the gate has a spherical shape with the centre at the point of intersection of the axes X and Y.

4. Device according to one of Claims 1 to 3, **characterized in that** the gate comprises a passage stop between a neutral position (N) and a reverse position (R).

5. Device according to one of Claims 1 to 4, **characterized in that** the gate is arranged such that the return between a reverse position (R) and a neutral position (N) takes place with a single movement of the control lever.

## Patentansprüche

1. Getriebedienvorrichtung (1), die dafür vorgesehen ist am oberen Teil einer Lenksäule installiert zu werden, unter einem Lenkrad, insbesondere eines Kraftfahrzeugs, die einen Bedienhebel (20) für einen Mechanismus zur Steuerung des Getriebes (30) über wenigstens zwei im wesentlichen zueinander orthogonale Achsen (X, Y) umfaßt, wobei eine Bewegung des Bedienhebels von einem Raster (11) geführt wird, das einen Führungsweg (15) umfaßt, der es gestattet, die verschiedenen Positionen des Bedienhebels (20) zu unterscheiden, **dadurch gekennzeichnet, daß** die Bedienvorrichtung (1) eine Rolle (32) umfaßt, die mit dem Bedienhebel verbunden ist, der dafür eingerichtet ist, durch den Führungsweg (15) des Rasters geführt zu werden.

2. Vorrichtung nach Anspruch 1, **dadurch gekennzeichnet, daß** das Raster eine zylindrische Form mit der Achse Y hat.

3. Vorrichtung nach Anspruch 1, **dadurch gekennzeichnet, daß** das Raster eine sphärische Form hat, mit dem Schnittpunkt der Achsen X und Y als Mittelpunkt.

4. Vorrichtung .nach einem der Ansprüche 1 bis 3, **dadurch gekennzeichnet, daß** das Raster einen Anschlag für den Wechsel zwischen einer neutralen Position (N) und einer Rückwärtsgangposition (R) umfaßt.

5. Vorrichtung nach einem der Ansprüche 1 bis 4, **dadurch gekennzeichnet, daß** das Raster dafür eingerichtet ist, daß der Wechsel zurück von einer Rückwärtsgangposition (R) zu einer neutralen Position (N) durch eine einfache Bewegung des Bedienhebels geschieht.
